# EUROPÄISCHE PATENTSCHRIFT

(11) **EP 0 545 926 B1**
(45) Veröffentlichungstag und Bekanntmachung des Hinweises auf die Patenterteilung: **14.09.1994**
(21) Anmeldenummer: 91904863.7
(22) Anmeldetag: 28.02.1991
(51) Int. Cl.: H02H 3/44

(54) **STROMWÄCHTERSCHALTUNG**
CURRENT RELAY CIRCUIT
CIRCUIT DE SURVEILLANCE DU COURANT

(30) Priorität: 31.08.1990 DE 4027701
(43) Veröffentlichungstag der Anmeldung: 16.06.1993
(73) Patentinhaber: MAURER, Ingo, D-80801 München (DE)
(72) Erfinder: KOWATSCH, Hermann, D-8911 Windach (DE)
(74) Vertreter: Schoppe, Fritz, Dipl.-Ing.
(86) Internationale Anmeldenummer: DE9100192
(87) Internationale Veröffentlichungsnummer: WO9204756

(56) Entgegenhaltungen:
- EP-A- 0 412 056
- DE-A- 3 841 186
- DE-U- 8 912 486
- GB-A- 2 205 459

## Beschreibung

Die vorliegende Erfindung betrifft eine Stromwächterschaltung zum Abschalten der Leistungsversorgung eines elektrischen Gerätes durch Betätigung eines Leistungsschalters, insbesondere zum Abschalten des Transformators eines Niedervolt-Halogenlampen-Seilsystemes von dem Netz, falls der von dem elektrischen Gerät aufgenommene, zu überwachende Strom außerhalb eines zulässigen Strombereiches liegt, nach dem Oberbegriff des Patentanspruchs 1.

Insbesondere befaßt sich die vorliegende Erfindung mit einer Stromwächterschaltung zum Überwachen des von einem Niedervolt-Halogenlampen-Seilsystem aufgenommenen Versorgungsstromes und zum Abschalten des Transformators dieses Niedervolt-Halogenlampen-Seilsystemes von dem Netz, falls der von dem Seilsystem aufgenommene Versorgungsstrom außerhalb eines zulässigen Strombereiches liegt.

Stromwächterschaltungen zum Überwachen des Versorgungsstromes von Niedervolt-Halogenlampen-Seilsystemen werden aus Gründen des Brandschutzes seit einiger Zeit für jedes Niedervolt-Halogenlampen-Seilsystem gesetzlich gefordert. Bei einem derartigen Niedervolt-Halogenlampen-Seilsystem sind üblicherweise zwei ausgangsseitig an einen Transformator angeschlossene seilartige Leiter in einem zu beleuchtenden Raum unterhalb der Decke des Raumes gespannt. Eine Mehrzahl von Halogenlampenelementen ist mit zwei Anschlußkontakten an diesem Seilsystem aufgehängt. Es hat sich gezeigt, daß aus Gründen der Brandsicherheit bei derartigen Seilsystemen eine Überwachung des aufgenommenen Versorgungsstromes durchgeführt werden muß. Da es sich bei den beiden seilartigen Leitern systembedingt um nicht isolierte Leiter handelt, kann eine unerwünschte Berührung des Seilsystemes durch einen leitenden Gegenstand zu einem Kurzschluß bzw. Nebenschluß über diesen leitenden Gegenstand führen, wodurch dieser aufgeheizt und möglicherweise in Brand gesetzt werden kann. Um derartige Fälle auszuschließen, ist auch bei bekannten Seilsystemen in jüngerer Zeit eine Stromwächterschaltung zum Überwachen des aufgenommenen Stromes vorgesehen. Da aber die von dem Niedervolt-Halogenlampen-Seilsystem insgesamt aufgenommene Leistung von der Anzahl und Stärke der verwendeten Halogenlampenelemente abhängt, muß eine derartige Stromwächterschaltung so ausgelegt sein, daß sie das System durch Öffnen eines Relais oder Betätigen eines anderen Leistungsschalters dann abschaltet, wenn die überwachte, aufgenommene Leistung um einen bestimmten Betrag oberhalb der Nennleistung des individuell installierten Systemes liegt. Um dies zu gewährleisten, wird bei der bekannten Stromwächterschaltung ein Spannungssignal erzeugt, das dem momentan aufgenommenen Strom entspricht. Dieses Spannungssignal wird mit einem Stromfenster verglichen, das einen zulässigen unteren und oberen Stromwert definiert. Dieses Stromfenster wird durch die Bedienungsperson des Niedervolt-Halogenlampen-Seilsystemes nach dessen Installation durch Potentiometereinstellung so festgelegt, daß der momentan aufgenommene Strom innerhalb des Fensters liegt, sodaß also die Stromwächterschaltung nicht anspricht und das System nicht abschaltet. Eine derartige Einstellung erfordert mehrere Versuche, bis das Stromfenster so gelegt ist, daß das Niedervolt-Halogenlampen-Seilsystem nicht mehr abgeschaltet wird. Üblicherweise muß eine derartige Einstellung durch einen technisch nicht versierten Endabnehmer vorgenommen werden, der sich durch diese Tätigkeit häufig überfordert fühlt. Typischerweise hat das Stromfenster eines solchen, von Hand mittels eines Potentiometers einstellbaren Stromwächters eine Fenstergröße von 50 Watt zwischen dem minimalen und dem maximalen Strom. Wenn nun das Stromfenster durch die Bedienungsperson besonders unglücklich gelegt ist, d. h. gerade so gelegt ist, daß die Nennleistung des Niedervolt-Halogenlampen-Seilsystemes knapp oberhalb der unteren Grenze des Stromfensters liegt, so kann im Falle eines unerwünschten Kontaktes noch eine Restleistung von fast 50 Watt zu einer möglichen Brandgefahr bei unerwünschter Berührung des Seilsystemes durch einen leitfähigen, möglicherweise brennbaren Körper führen, ohne daß in diesem Falle die bekannte Stromwächterschaltung das System abschalten würde. Daher erweist sich die bekannte Stromwächterschaltung auch unter Sicherheitsgesichtspunkten als bedenklich. Wie erläutert, ist ein Niedervolt-Halogenlampen-Seilsystem mit einer Mehrzahl von Halogenlampenelementen ausgerüstet. Wenn nun eines der Halogenlampenelemente ausfällt, unterschreitet die dann reduzierte Leistungsaufnahme des Seilsystemes die untere Grenze des Stromfensters, so daß es zwangsläufig zu einer Gesamtabschaltung des Niedervolt-Halogenlampen-Seilsystemes kommt. Falls es sich bei diesem System, wie dies häufig der Fall ist, um die Beleuchtung eines Restaurants handelt, ist die Folge eines solchen Gesamtausfalles des Systemes augenscheinlich. Daher vermag die bekannte Stromwächterschaltung auch unter dem Gesichtspunkt nicht zufriedenzustellen, daß ein mit ihr ausgestattetes Niedervolt-Halogenlampen-Seilsystem zu stark ausfallgefährdet ist. Ein weiterer, systembedingter Nachteil der bekannten Stromwächterschaltung muß darin gesehen werden, daß es nicht möglich ist, ein mit dieser Stromwächterschaltung ausgestattetes Halogenlampensystem zu dimmen, d. h. in seiner Helligkeit zu regeln, da mit einem Dimmvorgang eine Absenkung der aufgenommenen Leistung verbunden wäre, die zwangsläufig zu einem Ansprechen der bekannten Stromwächterschaltung führen muß.

Eine Stromwächterschaltung der soeben beschriebenen Art ist aus der DE 89 12 486 U1 bekannt. Diese Schaltung umfaßt ein Zeitglied, das ein Abschaltrelais innerhalb einer bestimmten Zeitdauer ab dem Einschalten der Netzspannung inaktiviert.

Aus der DE 38 41 186 A1 ist eine weitere derartige Stromwächterschaltung bekannt, die ferner eine Vergleicherschaltung umfaßt, die eine Abschalteinrichtung ansteuert.

Ausgehend von diesem Stand der Technik liegt der vorliegenden Erfindung die Aufgabe zugrunde, eine Stromwächterschaltung der eingangs genannten Art so weiterzubilden, daß keine Justage oder Einstellung durch den Endabnehmer vorgenommen werden muß und daß die Betriebssicherheit des mit der Stromwächterschaltung ausgestatteten elektrischen Gerätes weiter erhöht wird.

Diese Aufgabe wird durch eine Stromwächterschaltung mit den im Patentanspruch 1 angegebenen Merkmalen gelöst.

Der Erfindung liegt die Erkenntnis zugrunde, daß eine hohe Brandsicherheit mit den im Stand der Technik bekannten Stromwächterschaltungen nicht erzielbar sein kann, solange diese von Laien eingestellt werden und die Stromwächterschaltungen nicht als selbstlernfähige Schaltungen ausgeführt sind. Der typische Ansatz in der Entwicklung eines selbstlernfähigen Systemes wäre der Einsatz eines Mikrocomputers. Die Erfindung zieht jedoch ausgehend von der oben beschriebenen Grunderkenntnis in Betracht, daß die Verwendung selbstlernfähiger Meßschaltungen auf digitaler Basis, die sich beispielsweise eines Mikrocomputers bedienen, aus Kostenüberlegungen und aus Platzgründen für viele Anwendungsfälle, wie beispielsweise den Anwendungsfall eines Niedervolt-Halogenlampen-Seilsystemes, ausscheiden muß. Die Erfindung bedient sich daher eines ersten Kondensators, der über die erste Steuerschaltung auf die von dem Spitzenwert des momentan gemessenen Versorgungsstromes abhängige Kondensatorspannung aufladbar ist. Eine Einschaltsignalerzeugungsschaltung erzeugt ein Einschaltsignal während einer bestimmten Zeitdauer ab dem Einschalten der Versorgungsspannung bzw. Netzspannung des durch die Stromwächterschaltung zu überwachenden elektrischen Gerätes, wie beispielsweise des Halogenlampen-Seilsystemes. Die erfindungsgemäße Stromwächterschaltung führt bei Einschalten des Gesamtsystemes einen Lernvorgang durch, bei dem die aktuell ermittelte Leistungsaufnahme als Kondensatorspannung des zweiten Kondensators während einer bestimmten Zeitdauer ab Einschalten des Gesamtsystemes abgespeichert wird. Eine zweite Steuerschaltung spricht auf das von der Einschaltsignalerzeugungsschaltung generierte Einschaltsignal an und lädt bei dessen Vorliegen den zweiten Kondensator auf einen von der ersten Kondensatorspannung abhängigen zweiten Kondensatorspannungswert auf. Eine dritte Steuerschaltung bewirkt eine Regelung der Ladung des zweiten Kondensators in der Weise, daß der zweite Kondensator entladen wird, wenn die zweite Kondensatorspannung die erste Kondensatorspannung um mehr als einen vorgegebenen Differenzspannungswert übersteigt, wobei anderenfalls der zweite Kondensator mit einer großen Zeitkonstante aufgeladen wird. Hierdurch wird sichergestellt, daß Entladungen oder unerwünschte Aufladungen des zweiten Kondensators nicht zu einer Verfälschung des Arbeitspunktes führen. Ferner wird sichergestellt, daß langfristige Änderungen des Nennstromes, die beispielsweise durch Temparaturschwankungen ausgelöst werden können, durch eine Nachregelung der zweiten Kondensatorspannung Berücksichtigung finden. Letztlich umfaßt die erfindungsgemäße Stromwächterschaltung eine Vergleicherschaltung, die den Leistungsschalter dann aktiviert bzw. öffnet, wenn die erste Kondensatorspannung einen von der zweiten Kondensatorspannung abhängigen Spannungswert überschreitet.

Bevorzugte Weiterbildungen und Ausgestaltungen der vorliegenden Erfindung sind in den Unteransprüchen definiert.

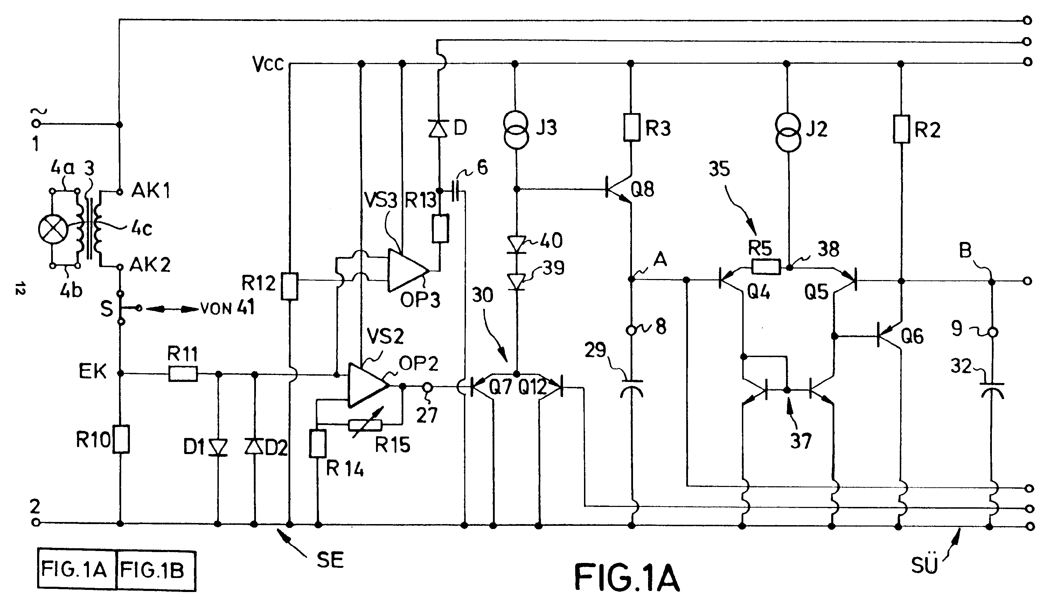

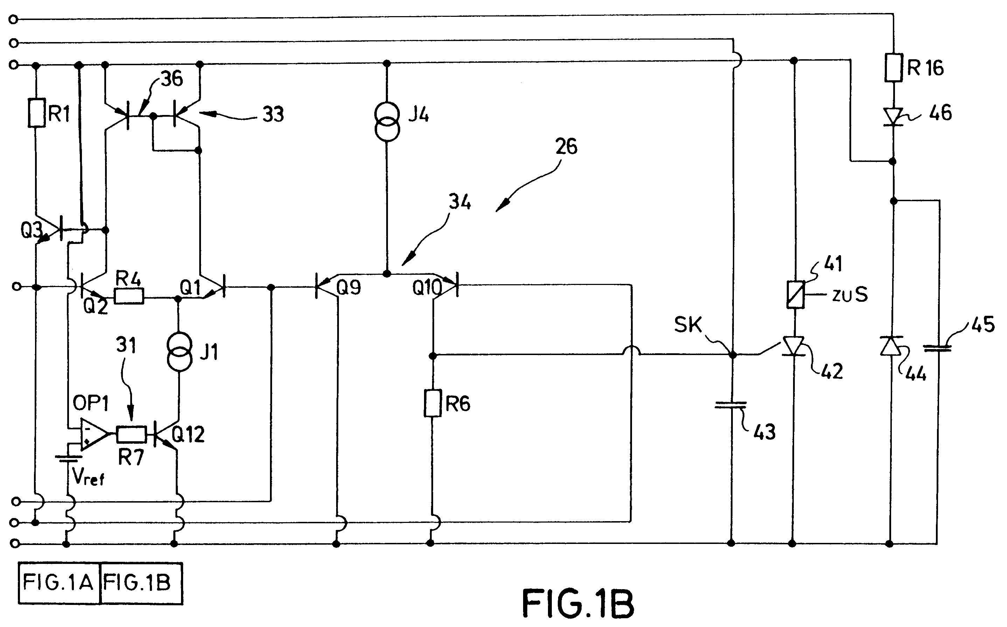

Nachfolgend wird unter Bezugnahme auf die beiliegende Zeichnung ein bevorzugtes Ausführungsbeispiel der erfindungsgemäßen Stromwächterschaltung näher erläutert. Es zeigt:
- Die einzige Figur: eine bevorzugte Ausführungsform der erfindungsgemäßen Stromwächterschaltung in Anwendung auf ein Niedervolt-Halogenlampen-Seilsystem.

Wie in der einzigen Figur gezeigt ist, umfaßt die erfindungsgemäße Stromwächterschaltung zwei Netzanschlüsse 1, 2, von denen einer 1 zum Anschluß an die Phase und der andere 2 zum Anschluß der Stromwächterschaltung an den Nulleiter des Netzes dienen. Für den Fachmann ist offensichtlich, daß die Anschlüsse vertauscht werden können und daß der Anschluß 2 an den Nulleiter durch einen Anschluß an Masse ersetzt werden kann.

Ausgangsseitig ist an die erfindungsgemäße Stromwächterschaltung an zwei Ausgangsklemmen AK1, AK2 ein elektrisches Gerät in Form eines Niedervolt-Halogenlampen-Seilsystemes angeschlossen, das einen Transformator 3 zum Herabsetzen der Netzspannung in eine Niedervoltspannung, Seile 4a, 4b des Seilsystemes und eine Mehrzahl von Halogenlampen 4c umfaßt, von den aus Gründen der Einfachheit lediglich eine dargestellt ist. Die zweite Ausgangsklemme AK2 ist über einen als Relais ausgeführten Leistungsschalter 41, S an eine Eingangsklemme EK einer noch zu erläuternden Stromerfassungsschaltung SE angeschlossen, die zwischen der Eingangsklemme EK und dem Anschlußkontakt 2 für den Nulleiter geschaltet ist. Die Stromerfassungsschaltung SE umfaßt einen niederohmigen Eingangswiderstand R10 zwischen der Eingangsklemme EK und dem Anschlußkontakt 2 für den Nulleiter, über den der Primärstrom des Transformators 3 fließt und einen entsprechenden, erfaßbaren Spannungsabfall erzeugt. An die Eingangsklemme EK der Stromerfassungsschaltung SE ist ein Schutzwiderstand R11 angeschlossen, der ausgangsseitig mit zwei antiparallel geschalteten Dioden D1, D2 an den Nullleiter angeschlossen ist, so daß der maximale Signalspannungshub zur Weiterverarbeitung in der Stromerfassungsschaltung SE auf die Diodendurchlaßspannungen dieser Dioden D1, D2 begrenzt ist. Das über die Dioden abfallende Spannungssignal wird durch einen zweiten Operationsverstärker OP2 verstärkt, dessen Verstärkung mittels eines Potentiometers R15 im Rückkopplungszweig einstellbar ist. Der invertierende Eingang des zweiten Operationsverstärkers OP2 ist über einen Widerstand R14 mit dem Nulleiter verbunden. Lediglich aus Gründen der Vollständigkeit sei erwähnt, daß dieser zweite Operationsverstärker OP2 über einen Versorgungsspannungsanschluß VS2 mit einer Versorgungsspannung V_{cc} des Systemes über eine Versorgungsspannungsleitung beaufschlagt wird. Die Erzeugung der Versorgungsspannung wird später erläutert.

Die Spannung am nicht-invertierenden Eingang des zweiten Operationsverstärkers wird dem nicht-invertierenden Eingang eines dritten Operationsverstärkers OP3 zugeführt, dessen invertierender Eingang mittels eines weiteren Potentiometers R12 mit einer Bezugsspannung beaufschlagt wird, deren Spannungswert der Eingangsspannung an dem nicht-invertierenden Eingang des dritten Operationsverstärkers OP3 für den Fall entspricht, daß der zu überwachende Strom der zulässigen Nennleistung des Transformators 3 entspricht. Falls der zu überwachende Strom diesen zulässigen Strom übersteigt, der der zulässigen Nennleistung des Transformators 3 entspricht, erzeugt der dritte Operationsverstärker OP3 ausgangsseitig ein Signal von hohem Pegel, welches einer Tiefpaßfilterschaltung zugeführt wird, die aus der Reihenschaltung eines Widerstandes R13 und eines Kondensators 6 besteht. Der Verbindungspunkt des Widerstandes R13 und des Kondensators 6, der den Ausgangsanschluß dieser Tiefpaßfilterschaltung bildet, liegt über eine vierte Diode D4 an einem ausgangsseitigem Steuerknoten SK der Schaltung.

Wie erläutert, liegt am Ausgang des zweiten Operationsverstärkers OP2 ein Spannungssignal an, das proportional zum Spitzenwert des zu überwachenden Primärstromes des Transformators 3 ist. Dieses Signal wird einem Eingang 27 einer Stromüberwachungsschaltung zugeführt, die in ihrer Gesamtheit mit dem Bezugszeichen SÜ bezeichnet ist. Die Stromüberwachungsschaltung SÜ umfaßt einen ersten Kondensator 29, der über eine erste Steuerschaltung 30 auf eine von dem jeweiligen Spitzenwert des zu überwachenden Stromes abhängige erste Kondensatorspannung aufladbar ist, eine Einschaltsignalerzeugungsschaltung 31 zum Erzeugen eines Einschaltsignales während einer vorbestimmten Zeitdauer ab Einschalten der Netzspannung bzw. Versorgungsspannung des Systemes, einen zweiten Kondensator 32, eine zweite Steuerschaltung 33, die auf das Einschaltsignal von der Einschaltsignalerzeugungsschaltung 31 anspricht, und durch die der zweite Kondensator 32 bei Vorliegen des Einschaltsignales auf eine von der ersten Kondensatorspannung abhängige zweite Kondensatorspannung aufladbar ist, eine dritte Steuerschaltung 35 zum Regeln der Ladung des zweiten Kondensators 32, sowie eine erste Vergleicherschaltung 34, die eingangsseitig mit dem ersten und zweiten Kondensator 29, 32 und ausgangsseitig über einen Thyristor 42 mit dem Leistungsschalter 41, S in Wirkverbindung steht und die den Leistungsschalter S öffnet, wenn die erste Kondensatorspannung einen von der zweiten Kondensatorspannung abhängigen Spannungswert überschreitet.

Die dritte Steuerschaltung 35 zum Regeln der Ladung des Kondensators 32 ist mit dem ersten Kondensator 29 und dem zweiten Kondensator 32 verbunden. Die zweite Steuerschaltung 33 umfaßt einen ersten und einen zweiten Transistor Q1, Q2, die kollektorseitig jeweils mit Ausgängen einer ersten Stromspiegelschaltung 36 verbunden sind. Der erste Transistor Q1 liegt emitterseitig direkt an einem ersten gemeinsamen Knoten, mit dem der zweite Transistor Q2 über einen vierten Widerstand R4 verbunden ist. An diesen Knoten ist eine erste Stromquelle J1 angeschlossen, die an den Kollektor eines zwölften Transistors Q12 angeschlossen ist, der emitterseitig an Masse liegt und basisseitig über einen siebten Widerstand R7 mit dem Ausgang eines ersten Operationsverstärkers OP1 verbunden ist, dem an seinem invertierenden Eingang die Versorgungsspannung V_{cc} und an seinem nicht-invertierenden Eingang eine Bezugsspannung V_{ref} zugeführt wird, welche etwa 70 % der Versorgungsspannung V_{cc} beträgt.

Der erste Transistor Q1 liegt basisseitig an dem ersten Kondensator 29, während der zweite Transistor Q2 basisseitig an dem zweiten Kondensator 32 liegt.

Die zweite Steuerschaltung 32 umfaßt ferner einen dritten Transistor Q3, dessen Basis mit dem Kollektor des zweiten Transistors Q2 und dessen Emitter mit der Basis des zweiten Transistors Q2 und dessen Kollektor über einen ersten Widerstand R1 mit der Versorgungsspannung V_{cc} in Verbindung stehen.

Die dritte Steuerschaltung 35 umfaßt einen vierten und fünften Transistor Q4, Q5. Der vierte Transistor Q4 ist basisseitig mit dem ersten Kondensator 29 verbunden. Der fünfte Transistor Q5 liegt mit seiner Basis an dem zweiten Kondensator 32. Der vierte und fünfte Transistor Q4, Q5 liegen kollektorseitig an Stromeingängen einer zweiten Stromspiegelschaltung 37, die ebenso wie die erste Stromspiegelschaltung 36 vorzugsweise ein Stromverhältnis von 1 zu 1 festlegt.

Ein fünfter Widerstand R5 liegt zwischen dem Emitter des vierten Transistors Q4 und einem zweiten Knoten 38, an den der Emitter des fünften Transistors Q5 und eine zweite Stromquelle J2 angeschlossen sind. Ein sechster Transistor Q6 ist kollektorseitig an den Nulleiter 2, emitterseitig an die Basis des fünften Transistor Q5 und basisseitig an dessen Kollektor angeschlossen. Zwischen der Basis des fünften Transistors Q5 und der Versorgungsspannung V_{cc} liegt ein zweiter Widerstand R2. Der Widerstandswert des zweiten Widerstandes R2 ist hochohmig gegenüber dem Widerstand des ersten Widerstandes R1 der zweiten Steuerschaltung 33.

Die erste Steuerschaltung 30 umfaßt einen siebten Transistor Q7, der basisseitig an den Eingang 27, kollektorseitig an den Nulleiter 2 und emitterseitig über zwei Dioden 39, 40 an die Basis eines achten Transistors Q8 angeschlossen ist, dessen Basis gleichfalls über eine dritte Stromquelle J3 mit der Versorgungsspannung V_{cc} in Verbindung steht. Der Kollektor des achten Transistors Q8 steht über einen dritten Widerstand R3 mit der Versorgungsspannung V_{cc} in Verbindung. Der Emitter des achten Transistors Q8 ist mit dem ersten Kondensator 29 verbunden.

Die erste Vergleicherschaltung 34 umfaßt einen neunten Transistor Q9, der basisseitig an den ersten Kondensator 29, kollektorseitig an den Nulleiter 2 und emitterseitig mit einer vierten Stromquelle J4 verbunden ist, sowie einen zehnten Transistor Q10, der emitterseitig gleichfalls mit der vierten Stromquelle J4, basisseitig mit dem zweiten Kondensator 32 und kollektorseitig mit einem Steuerknoten SK des Thyristors 42 sowie einem gegen den Nulleiter geschalteten sechsten Widerstand R6 verbunden ist.

Die Widerstandswerte des vierten und fünften Widerstandes R4, R5 stimmen miteinander überein.

Nachfolgend wird die Funktionsweise dieser Stromüberwachungsschaltung erläutert.

Eine an dem Eingang 27 der Stromüberwachungsschaltung SÜ anliegende Eingangsspannung erscheint aufgrund der jeweiligen Spannungsabfälle über die Basis-Emitter-Strecke des siebten und achten Transistors Q7, Q8 sowie über die Dioden 39, 40 mit einer Differenzspannung von etwa + 1,4 Volt oberhalb des Spitzenwertes der am Eingang 27 anliegenden Spannung an dem ersten Kondensator 29.

Ein Glättungskondensator 45 von hoher Kapazität wird über einen sechzehnten Widerstand R16 und eine nachgeschaltete Gleichrichterdiode 46 mit der Versorgungsspannung geladen, wobei der Spannungswert an diesem Kondensator 45 durch eine Zenerdiode 44 in Parallelschaltung zu dem Glättungskondensator 45 begrenzt wird. Die an dem Glättungskondensator anliegende Spannung bildet die Versorgungsspannung V_{cc}.

Bei Einschalten der Netzspannung steigt die Versorgungsspannung V_{cc} mit dem Aufladen des Glättungskondensators 45 exponentiell an. Der erste Operationsverstärker OP1 erzeugt ausgangsseitig ein Einschaltsignal, solange die Versorgungsspannung V_{cc} niedriger als die Bezugsspannung V_{ref} ist. Während des Vorliegens dieses Einschaltsignales wird die zweite Steuerschaltung 33 aktiv geschaltet. Der erste und zweite Transistor Q1, Q2 werden mit dem gleichen Strom von der ersten Stromspiegelschaltung 36 versorgt. Das Potential am Emitter des dritten Transistors Q3 folgt daher dem Potential an der Basis des ersten Transistors Q1 mit einer Potentialdifferenz, die sich aus dem Produkt des Widerstandswertes des vierten Widerstandes R4 und des halben Stromes der ersten Stromquelle J1 ergibt. Damit ist die Spannung an dem zweiten Kondensator 32 und somit am Punkt B der Stromüberwachungsschaltung SÜ während der Zeitdauer des Einschaltsignales um eine feste Spannungsdifferenz oberhalb der Spannung am Punkt A oder derjenigen Spannung am ersten Kondensator 29, wobei diese Spannungsdifferenz durch die Größe des Widerstandwertes des vierten Widerstandes R4 einstellbar ist.

Nach dem Ausschalten des Einschaltsignales wird die zweite Steuerschaltung 33 passiv. Die Regelung der Ladung des zweiten Kondensators 32 in Abhängigkeit von der Spannung über den ersten Kondensator 29 erfolgt nun ausschließlich über die dritte Steuerschaltung 35. Die Arbeitsweise des vierten und fünften Transistors Q4, Q5 in Verbindung mit der zweiten Stromspiegelschaltung 37 und der zweiten Stromquelle J2 entspricht der Arbeitsweise der zweiten Steuerschaltung 33, sodaß auf eine erneute Erläuterung verzichtet werden kann.

Wenn das Potential an der Basis des vierten Transistors Q4 höher als dasjenige an der Basis des fünften Transistors Q5 ist, bleibt der sechste Transistor Q6 ausgeschaltet, wobei der zweite Kondensator 32 über den hochohmigen Widerstand R2 sehr langsam aufgeladen wird. Zweckmäßige Zeitkonstanten liegen in der Größenordnung von mehreren Sekunden.

Wenn die Spannung am Punkt A diejenige am Punkt B unterschreitet, wird der sechste Transistor Q6 durchgeschaltet, so daß der zweite Kondensator 32 schnell entladen wird, bis sich wiederum ein Gleichgewichtszustand einstellt, bei dem das Potential am Punkt B um die durch den fünften Widerstand R5 festgelegte Spannungsdifferenz oberhalb des Potentiales am Punkt A liegt.

Bei einem Einschalten der Gesamtschaltung stellt sich somit ein von der Größe des anfänglichen Primärstromes des Niederspannungs-Halogenlampen-Seilsystemes 3, 4 abhängiger Spannungswert an dem ersten Kondensator 29 ein, der mit einer festen vorgegebenen Spannungsdifferenz während der Einschaltzeitdauer von dem zweiten Kondensator 32 übernommen wird. Nach Ablauf der Einschaltzeitdauer führt eine Erhöhung des Primärstromes durch den Transformator 3, die beispielsweise durch einen unerwünschten Nebenschluß bedingt sein kann, zu einem schnellen Ansteigen der Spannung an dem ersten Kondensator 29 aufgrund des niederohmigen dritten Widerstandes R3, der durch den dritten Transistor Q3 gegen den ersten Kondensator 29 geschaltet wird.

Die Spannung am zweiten Kondensator 32 kann derjenigen am ersten Kondensator 29 nun nicht mehr folgen, da das Einschaltsignal fehlt, bzw. folgt der genannten Spannung nur sehr langsam aufgrund der hochohmigen Natur des zweiten Widerstandes R2.

Wenn die Spannung über den ersten Kondensator 29 diejenige über den zweiten Kondensator 32 übersteigt, sperrt der neunte Transistor Q9, sodaß der zehnte Transistor Q10 leitet. In diesem Zustand erzeugt der Strom von der Stromquelle J4 über den sechsten Widerstand R6 eine Ausgangsspannung, die dem Steuerknoten SK zugeführt wird.

An dem Steuerknoten SK, an den auch die vierte Diode D4 der dritten Vergleicherschaltung angeschlossen ist, ist ein Glättungskondensator 43 angeschlossen. Das über den Glättungskondensator 43 abfallende Spannungssignal liegt an der Zündstrecke des Thyristores 42, der in Reihe mit dem Relais 41, S liegt. Wenn daher der zehnte Transistor Q10 durchschaltet, zündet der Thyristor 42, so daß das Relais 41 den Schalter S öffnet. Damit ist eine Brandgefahr völlig ausgeschlossen.

Bei der erfindungsgemäßen Schaltung ist es möglich, das Ausschalten herbeizuführen, wenn der zu überwachende Strom einen anfänglichen Wert nur um wenige Prozent übersteigt. Da sich die erfindungsgemäße Schaltung in selbstlernender Weise automatisch auf den Leistungsbedarf des zu überwachenden elektrischen Gerätes einstellt, bedarf es keiner aufwendigen Bedienung durch eine Bedienungsperson.

Bei Ausfall einer Lampe kommt es zu einer automatischen Anpassung des den Arbeitspunkt darstellenden Spannungswertes der Spannung über den zweiten Kondensator 32. Damit bleibt ein mit der erfindungsgemäßen Stromerfassungsschaltung ausgestattetes Niedervolt-Halogenlampen-Seilsystem auch bei Lampenausfall betriebsbereit.

## Patentansprüche

1. Stromwächterschaltung zum Abschalten der Leistungsversorgung eines elektrischen Gerätes durch Betätigen eines Leistungsschalters (41, S),
insbesondere zum Abschalten des Transformators (3) eines Niedervolt-Halogenlampen-Seilsystemes von dem Netz,
falls der von dem elektrischen Gerät aufgenommene, zu überwachende Strom außerhalb eines zulässigen Strombereiches liegt,
gekennzeichnet durch,
- einen ersten Kondensator (29), der über eine erste Steuerschaltung (30) auf eine von dem jeweiligen Spitzenwert des zu überwachenden Stromes abhängige erste Kondensatorspannung aufladbar ist,
- eine Einschaltsignalerzeugungsschaltung (31) zum Erzeugen eines Einschaltsignales während einer bestimmten Zeitdauer ab Einschalten der Netzspannung des elektrischen Gerätes (4),
- einen zweiten Kondensator (32),
- eine zweite Steuerschaltung (33), die auf das Einschaltsignal anspricht und die den zweiten Kondensator (32) bei Vorliegen des Einschaltsignales auf eine von der ersten Kondensatorspannung abhängige zweite Kondensatorspannung auflädt,
- eine dritte Steuerschaltung (35) zum Regeln der Ladung des zweiten Kondensators (32), die mit dem ersten Kondensator (29) und dem zweiten Kondensator (32) verbunden ist und die derart auf die erste und die zweite Kondensatorspannung anspricht, daß sie den zweiten Kondensator (32) entlädt, wenn die zweite Kondensatorspannung die erste Kondensatorspannung um mehr als einen vorgegebenen Differenzspannungswert übersteigt, und daß sie anderenfalls den zweiten Kondensator (32) mit einer großen Zeitkonstante auflädt, und
- eine erste Vergleicherschaltung (34), die eingangsseitig mit dem ersten und zweiten Kondensator (29, 32) und ausgangsseitig mit dem Leistungsschalter (41, S) in Wirkverbindung steht und die den Leistungsschalter (41, S) öffnet, wenn die erste Kondensatorspannung einen von der zweiten Kondensatorspannung abhängigen Spannungswert überschreitet.

2. Stromwächterschaltung nach Anpruch 1, dadurch gekennzeichnet,
daß die Einschaltsignalerzeugungsschaltung (31) eine zweite Vergleicherschaltung (OP1) umfaßt, die eingangsseitig mit der Versorgungsspannung versorgt wird und einer Bezugsspannungsquelle (V_{ref}) in Verbindung steht und ein Ausgangssignal erzeugt, solange die Bezugsspannung (V_{ref}) größer als die Versorgungsspannung (V_{cc}) ist.

3. Stromwächterschaltung nach Anspruch 1 oder 2, dadurch gekennzeichnet,
daß die zweite Steuerschaltung (33) einen ersten und einen zweiten Transistor (Q1, Q2) aufweist, die kollektorseitig mit einer ersten Stromspiegelschaltung (36) verbunden sind,
daß der erste und zweite Transistor (Q1, Q2) emitterseitig mit einem gemeinsamen ersten Knoten in Verbindung stehen, an den eine erste Stromquelle (J1) in Abhängigkeit von dem Einschaltsignal der Einschaltsignalerzeugungsschaltung (31) anschaltbar ist,
daß der erste Transistor (Q1) basisseitig an den ersten Kondensator (29) und der zweite Transistor (Q2) basisseitig an den zweiten Kondensator (32) angeschlossen sind, und
daß die zweite Steuerschaltung (33) einen dritten Transistor (Q3) aufweist, dessen Basis mit dem Kollektor des zweiten Transistors (Q2), dessen Emitter mit der Basis des zweiten Transistors (Q2) und dessen Kollektor über einen ersten Widerstand (R1) mit der Versorgungsspannung (V_{cc}) in Verbindung stehen.

4. Stromwächterschaltung nach einem der Ansprüche 1 - 3, dadurch gekennzeichnet,
daß die dritte Steuerschaltung (35) einen vierten und fünften Transistor (Q4, Q5) aufweist, die kollektorseitig mit einer zweiten Stromspiegelschaltung (37) verbunden sind,
daß der vierte und fünfte Transistor (Q4, Q5) mit einem gemeinsamen zweiten Knoten in Verbindung stehen, an den eine zweite Stromquelle (J2) angeschlossen ist,
daß der vierte Transistor (Q4) basisseitig an den ersten Kondensator (29) und der fünfte Transistor (Q5) basisseitig an den zweiten Kondensator (32) angeschlossen sind, und
daß die dritte Steuerschaltung (35) ferner einen sechsten Transistor (Q6) aufweist, dessen Basis mit dem Kollektor des fünften Transistors (Q5), dessen Emitter mit der Basis des fünften Transistors (Q5) und dessen Kollektor mit dem Nulleiter verbunden sind.

5. Stromwächterschaltung nach Anspruch 4, dadurch gekennzeichnet,
daß die dritte Steuerschaltung (35) ferner einen zweiten Widerstand (R2) aufweist, der zwischen der Versorgungsspannung (V_{cc}) und der Basis des fünften Transistors (Q5) geschaltet ist und einen gegenüber dem Widerstandswert des ersten Widerstandes (R1) hohen Widerstandswert hat.

6. Stromwächterschaltung nach einem der Ansprüche 1 - 5, dadurch gekennzeichnet,
daß die erste Steuerschaltung (30) einen siebten Transistor (Q7) aufweist, dem basisseitig eine von dem zu überwachenden Strom abhängige Spannung zuführbar ist, der kollektorseitig mit dem Nulleiter verbunden ist und emitterseitig über wenigstens eine Diode (39, 40) an die Basis eines achten Transistors (Q8) der ersten Steuerschaltung (30) sowie eine dritte (J3) angeschlossen ist, und
daß der Kollektor des achten Transistors (Q8) über einen dritten Widerstand (R3) mit der Versorgunsspannung (V_{cc}) und dessen Emitter mit dem ersten Kondensator (29) verbunden sind.

7. Stromwächterschaltung nach einem der Ansprüche 1 - 6, dadurch gekennzeichnet,
daß die erste Vergleicherschaltung (34) einen neunten Transistor (Q9), der basisseitig mit dem ersten Kondensator (29), kollektorseitig mit dem Nulleiter und emitterseitig mit einer vierten Stromquelle (J4) verbunden ist, und einen zehnten Transistor (Q10), der basisseitig mit dem zweiten Kondensator (32), emitterseitig mit der vierten Stromquelle (J4) und kollektorseitig über einen sechsten Widerstand (R6) mit dem Nulleiter verbunden ist, aufweist.

8. Stromwächterschaltung nach Anspruch 3 und 4, dadurch gekennzeichnet,
daß ein vierter Widerstand (R4) zwischen dem Emitter des zweiten Transistors (Q2) und dem ersten Knoten, an dem die erste Stromquelle (J1) geschaltet ist, liegt,
daß ein fünfter Widerstand (R5) zwischen dem Emitter des vierten Transistors (Q4) und dem zweiten Knoten, an den die zweite Stromquelle (J2) geschaltet ist, liegt, und
daß der Widerstandswert des fünften Widerstandes (R5) demjenigen des vierten Widerstandes (R4) gleicht.

9. Stromwächterschaltung nach einem der Ansprüche 1 - 8, gekennzeichnet durch,
- eine dritte Vergleicherschaltung (OP3), die einen von dem zu überwachenden Strom abhängige Spannung mit einer Bezugsspannung vergleicht, die der maximal zulässigen Leistung des Transformators (3) entspricht.

10. Stromwächterschaltung nach Anspruch 9, gekennzeichnet durch,
- eine der dritten Vergleicherschaltung nachgeschaltete Tiefpaßschaltung (R13, 6), der wiederum der Leistungsschalter (41, S) nachgeschaltet ist.

## Claims

1. A current relay circuit for switching off the power supply of an electrical equipment by operating a power switch (41, S),
especially for disconnecting the transformer (3) of a low-voltage halogen lamp cable system from the mains,
if the current consumed by the electrical equipment to be monitored is outside a permissible current range,
characterized by
- a first capacitor (29), which is adapted to be charged via a first control circuit (30) to a first capacitor voltage dependent upon the respective peak value of the current to be monitored,
- a switch-on signal generating circuit (31) for generating a switch-on signal for a predetermined period after the mains voltage of the electrical equipment (4) has been switched on,
- a second capacitor (32),
- a second control circuit (33) which responds to the switch-on signal and which charges said second capacitor (32) to a second capacitor voltage dependent upon the first capacitor voltage when the switch-on signal is present,
- a third control circuit (35) for regulating the charge of said second capacitor (32), said third control circuit (35) being connected to said first capacitor (29) and to said second capacitor (32) and responding to the first and second capacitor voltages in such a way that it discharges said second capacitor (32), if the second capacitor voltage exceeds the first by more than a preset voltage difference, and that it charges said second capacitor (32) with a high time constant in the other case, and
- a first comparator circuit (34) whose input side is in operative connection with said first and second capacitors (29, 32) and whose output side is in operative connection with the power switch (41, S), said first comparator circuit (34) breaking said power switch (41, S), if the first capacitor voltage exceeds a voltage value dependent upon the second capacitor voltage.

2. A current relay circuit according to claim 1, characterized in
that the switch-on signal generating circuit (31) comprises a second comparator circuit (OP1) whose input side has supplied thereto the supply voltage and is connected to a reference voltage source (V_{ref}), said second comparator circuit (OP1) generating an output signal as long as the reference voltage (V_{ref}) exceeds the supply voltage (V_{cc}).

3. A current relay circuit accordingto claim 1 or 2, characterized in
that the second control circuit (33) comprises first and second transistors (Q1, Q2), which are connected to a first current mirror circuit (36) on the collector side,
that the first and second transistors (Q1, Q2) are, on the emitter side, connected to a first common junction, which is adapted to have connected thereto a first current source (J1) in response to the switch-on signal of the switch-on signal generating circuit (31),
that the base side of the first transistor (Q1) is connected to the first capacitor (29) and that the base side of the second transistor (Q2) is connected to the second capacitor (32), and
that the second control circuit (33) comprises a third transistor (Q3) whose base is connected to the collector of the second transistor (Q2), whose emitter is connected to the base of said second transistor (Q2) and whose collector is connected to the supply voltage (V_{cc}) via a first resistor (R1).

4. A current relay circuit according to one of the claims 1 to 3, characterized in
that the third control circuit (35) comprises fourth and fifth transistors (Q4, Q5), which are connected to a second current mirror circuit (37) on the collector side,
that the fourth and fifth transistors (Q4, Q5) communicate with a common second junction having connected thereto a second current source (J2),
that the base side of the fourth transistor (Q4) is connected to the first capacitor (29) and the base side of the fifth transistor (Q5) to the second capacitor (32), and
that the third control circuit (35) additionally comprises a sixth transistor (Q6) whose base is connected to the collector of the fifth transistor (Q5), whose emitter is connected to the base of the fifth transistor (Q5) and whose collector is connected to the neutral conductor.

5. A current relay circuit according to claim 4, characterized in
that the third control circuit (35) additionally comprises a second resistor (R2) connected between the supply voltage (V_{cc}) and the base of the fifth transistor (Q5) and having a resistance value which is high in comparison with the resistance value of the first resistor (R1).

6. A current relay circuit according to one of the claims 1 to 5, characterized in
that the first control circuit (30) comprises a seventh transistor (Q7), the base side of which is adapted to have supplied thereto a voltage dependent upon the current to be monitored, and the collector side of which is connected to the neutral conductor, whereas the emittter side is connected via at least one diode (39, 40) to the base of an eighth transistor (Q8) of the first control circuit (30) as well as to a third currrent source (J3), and
that the collector of said eighth transistor (Q8) is connected via a third resistor (R3) to the supply voltage (V_{cc}), whereas the emitter thereof is connected to the first capacitor (29).

7. A current relay circuit according to one of the claims 1 to 6, characterized in
that the first comparator circuit (34) comprises a ninth transistor (Q9), which is connected to the first capacitor (29) on its base side, to the neutral conductor on its collector side and to a fourth current source (J4) on its emitter side, and a tenth transistor (Q10), which is connected to the second capacitor (32) on its base side, to the fourth current source (J4) on its emitter side and, via a sixth resistor (R6), to the neutral conductor on its collector side.

8. A current relay circuit according to claims 3 and 4, characterized in
that a fourth resistor (R4) is located between the emitter of the second transistor (Q2) and the first junction, which has connected thereto the first current source (J1),
that a fifth resistor (R5) is located between the emitter of the fourth transistor (Q4) and the second junction, which has connected thereto the second current source (J2), and
that the resistance value of the fifth resistor (R5) corresponds to that of the fourth resistor (R4).

9. A current relay circuit according to one of the claims 1 to 8, characterized by
- a third comparator circuit (OP3), which compares a voltage dependent upon the current to be monitored with a reference voltage corresponding to the maximum permissible power of the transformer (3).

10. A current relay circuit according to claim 9, characterized by
- a low-pass circuit (R13, 6), which is connected downstream of the third comparator circuit and which, in turn, is followed by the power switch (41, S).

## Revendications

1. Circuit de surveillance du courant destiné à couper l'alimentation en courant d'un appareil électrique en actionnant un disjoncteur (41, S), en particulier destiné à couper le transformateur (3) d'un système de cordons à lampes halogènes basse tension du réseau au cas où le courant à surveiller absorbé par l'appareil électrique se situe en dehors d'une plage de courant admissible, caractérisé par
- un premier condensateur (29) qui peut être chargé, via un premier circuit de réglage (30), à une première tension de condensateur fonction de la valeur de pointe respective du courant à surveiller,
- un circuit de génération de signal d'enclenchement (31) destiné à générer un signal d'enclenchement pendant un laps de temps déterminé à partir de l'enclenchement de la tension de réseau de l'appareil électrique (4),
- un second condensateur (32),
- un second circuit de réglage (33) qui réagit au signal d'enclenchement et qui charge le second condensateur (32), en cas de présence du signal d'enclenchement, à une seconde tension de condensateur fonction de la première tension de condensateur,
- un troisième circuit de réglage (35), destiné au réglage de la charge du second condensateur (32), qui est relié au premier condensateur (29) et au second condensateur (32) et qui réagit à la première et à la seconde tension de condensateur de telle manière qu'il décharge le second condensateur (32) lorsque la seconde tension de condensateur excède la première tension de condensateur de plus d'une valeur de tension différentielle préétablie et qu'il charge sinon le second condensateur (32) avec une grande constante de temps, et
- un premier circuit comparateur (34) qui est en communication de fonctionnement, côté entrée, avec les premier et second condensateurs (29, 32) et, côté sortie, avec le disjoncteur (41, S) et qui ouvre le disjoncteur (41, S) lorsque la première tension de condensateur excède une valeur de tension fonction de la seconde tension de condensateur.

2. Circuit de surveillance du courant suivant la revendication 1, caractérisé en ce que le circuit de génération de signal d'enclenchement (31) comprend un second circuit comparateur (OP1) qui est alimenté, côté entrée, par la tension d'alimentation et est en communication avec une source de tension de référence (V_{ref}) et génère un signal de sortie tant que la tension de référence (V_{ref}) est supérieure à la tension d'alimentation (V_{CC}).

3. Circuit de surveillance du courant suivant la revendication 1 ou 2, caractérisé en ce
que le second circuit de réglage (33) présente un premier et un second transistor (Q1, Q2) sont reliés, côté collecteur, à un premier circuit de miroir de courant (36),
que les premier et second transistors (Q1, Q2) se trouvent en communication, côté émetteur, avec un premier noeud commun auquel peut être connectée une première source de courant (J1), en fonction du signal d'enclenchement du circuit de génération de signal d'enclenchement (31),
que le premier transistor (Q1) est connecté, côté base, au premier condensateur (29) et le second transistor (Q2), côté base, au second condensateur (32), et
que le second circuit de réglage (33) présente un troisième transistor (Q3) dont la base est en communication avec le collecteur du second transistor (Q2), dont l'émetteur est en communication avec la base du second transistor (Q2) et dont le collecteur est en communication, via une première résistance (R1), avec la tension d'alimentation (V_{CC}).

4. Circuit de surveillance du courant suivant l'une des revendications 1 à 3, caractérisé en ce
que le troisième circuit de réglage (35) présente un quatrième et un cinquième transistor (Q4, Q5) qui sont reliés, côté collecteur, à un second circuit de miroir de courant (37),
que les quatrième et cinquième transistors (Q4, Q5) se trouvent en liaison avec un second noeud commun auquel est raccordée une seconde source de courant (J2),
que le quatrième transistor (Q4) est raccordé, côté base, au premier condensateur (29) et le cinquième transistor (Q5) est raccordé, côté base, au second condensateur (32), et
que le troisième circuit de réglage (35) présente, par ailleurs, un sixième transistor (Q6) dont la base est reliée au collecteur du cinquième transistor (Q5), l'émetteur à la base du cinquième transistor (Q5) et le collecteur au neutre.

5. Circuit de surveillance du courant suivant la revendication 4, caractérisé en ce que le troisième circuit de réglage (35) présente, par ailleurs, une seconde résistance (R2) qui est connectée entre la tension d'alimentation (V_{CC}) et la base du cinquième transistor (Q5) et qui a une valeur de résistance élevée par rapport à la valeur de résistance de la première résistance (R1).

6. Circuit de surveillance du courant suivant l'une des revendications 1 à 5, caractérisé en ce
que le premier circuit de réglage (30) présente un septième transistor (Q7) vers lequel peut être alimentée, côté base, une tension fonction du courant à surveiller, qui est relié, côté collecteur, au neutre et qui est raccordé, côté émetteur, via au moins une diode (39, 40), à la base d'un huitième transistor (Q8) du premier circuit de réglage (30) ainsi qu'à une troisième source de courant (J3), et
que le collecteur du huitième transistor (Q8) est relié, via une troisième résistance (R3), à la tension d'alimentation (V_{CC}) et son émetteur au premier condensateur (29).

7. Circuit de surveillance du courant suivant l'une des revendications 1 à 6, caractérisé en ce que le premier circuit comparateur (34) présente un neuvième transistor (Q9) qui est relié, côté base, au premier condensateur (29), côté collecteur, au neutre et, côté émetteur, à une quatrième source de courant (J4), et un dixième transistor (Q10) qui est relié, côté base, au second condensateur (32), côté émetteur, à la quatrième source de courant (J4) et, côté collecteur, via une sixième résistance (R6), au neutre.

8. Circuit de surveillance du courant suivant les revendications 3 et 4, caractérisé en ce
qu'une quatrième résistance (R4) se situe entre l'émetteur du second transistor (Q2) et le premier noeud auquel est connectée la première source de courant (J1),
qu'une cinquième résistance (R5) se situe entre l'émetteur du quatrième transistor (Q4) et le second noeud auquel est connectée la seconde source de courant (J2), et
que la valeur de résistance de la cinquième résistance (R5) est égale à celle de la quatrième résistance (R4).

9. Circuit de surveillance du courant suivant l'une des revendications 1 à 8, caractérisé par un troisième circuit comparateur (OP3) qui compare une tension fonction du courant à surveiller à une tension de référence qui correspond à la puissance admissible maximale du transformateur (3).

10. Circuit de surveillance du courant suivant la revendication 9, caractérisé par un circuit passe-bas (R13, 6), connecté après le troisième circuit comparateur, après lequel est connecté, à son tour, le disjoncteur (41, S).
